# DEMANDE DE BREVET EUROPEEN

(11) **EP 1 424 703 A1**
(43) Date de publication de la demande: **02.06.2004**
(21) Numéro de dépôt: 03300230.4
(22) Date de dépôt: 25.11.2003
(51) Int. Cl.: H01B 7/295, G02B 6/44

(54) **Câble ignifugé**

(30) Priorité: 29.11.2002 FR 0215065
(71) Demandeur: Nexans, 75008 Paris (FR)
(72) Inventeur: Pinto, Olivier, 69003 Lyon (FR)
(74) Mandataire: Feray, Valérie

(57) **Abrégé**

La présente invention porte sur un câble ignifugé (1) comportant un élément de transmission (2), un élément inflammable (3), une couche de revêtement ignifuge (4) entourant ledit élément inflammable (3) et en un matériau à base d'un polymère obtenu à partir d'une composition liquide polymérisable contenant au moins un précurseur dudit polymère comprenant des groupements fonctionnels choisis parmi les acrylates, les méthacrylates, les époxydes, les éthers vinyliques, les éthers allyliques et les oxétanes,
caractérisé en ce que ledit matériau comprend au moins un groupement phosphore.

## Description

La présente invention concerne un câble ignifugé.

De manière connue, les acquéreurs de câbles électriques et/ou optiques, de transport d'énergie et/ou de transmission d'informations souhaitent éviter la propagation de la flamme le long du câble, même posé à la verticale, en cas d'incendie, et empêcher un écoulement goutte à goutte du matériau isolant qui recouvre l'âme du câble et fondu à des températures élevées.

La demande de brevet EP 1 191 547 A1 décrit un câble dont la couche isolante en polyéthylène est revêtue d'une couche mince externe, de 5 à 50µm d'épaisseur de préférence, et destinée par exemple à lutter contre la propagation du feu. Ce revêtement est en polymère polyacrylate formé par rayonnement ultraviolet.

Tous les revêtements en polyacrylates ne permettent pas d'une part d'obtenir un câble qui va conserver un degré de fonctionnement lorsqu'il est soumis directement à une contrainte thermique extrême telle qu'une flamme ou un feu et d'autre part de retarder la dégradation du câble.

Par ailleurs, il est important que ce revêtement externe possède également une bonne résistance à l'abrasion.

Le but de l'invention est la mise au point d'un câble ignifugé et de préférence qui soit peu onéreux, facile et rapide à fabriquer.

Un autre but de l'invention est de mettre au point un tel câble résistant à l'abrasion.

L'invention propose à cet effet un câble ignifugé comportant un élément de transmission, un élément inflammable, une couche de revêtement ignifuge entourant ledit élément inflammable et en un matériau obtenu à partir d'une composition liquide polymérisable contenant au moins un précurseur dudit polymère comprenant des groupements fonctionnels choisis parmi les acrylates, les méthacrylates, les époxydes, les éthers vinyliques, les éthers allyliques s et les oxétanes,
caractérisé en ce que ledit matériau comprend au moins un groupement phosphore.

Le(s) groupement(s) phosphore(s) assurent les propriétés ignifugeantes du revêtement selon l'invention.

Dans un mode de réalisation préféré, le groupement phosphore peut être lié chimiquement audit polymère et, dans ce mode, le précurseur dudit polymère peut comporter au moins un groupement phosphore .

Avantageusement, le matériau selon l'invention peut être exempt d'halogènes, éléments classiquement utilisés comme agents retardateurs de feu.

Selon une caractéristique, ledit élément inflammable peut être choisi parmi l'un ou plusieurs des éléments suivants : une couche isolante, une couche de gainage, un élément de renfort, un tube de protection de fibres optiques, une âme rainurée, un filin, un ruban, une tresse.

Lorsque ledit élément inflammable est une couche isolante, ladite couche isolante peut être faite en un matériau choisi parmi un polymère thermoplastique exempt d'halogène, et de préférence le polyéthylène qui présente de bonnes propriétés diélectriques.

Par exemple dans le domaine des câbles de télécommunications, souvent disposés verticalement dans les gaines d'aération, le polyéthylène protégé par le revêtement ignifuge selon l'invention peut remplacer avantageusement le polytétrafluoroéthylène (PTFE) ou les copolymères de tétrafluoroéthylène et hexafluoropropylène (FEP) plus résistants au feu mais présentant des propriétés diélectriques inférieures.

L'élément inflammable peut inclure des charges minérales ignifugeantes ne le protégeant pas suffisamment du feu. Dans cette configuration, le revêtement ignifuge vient renforcer la résistance au feu de cet élément.

Dans un mode de réalisation de l'invention, l'élément de transmission est choisi parmi un conducteur optique, un conducteur électrique.

Dans un premier mode de réalisation, ladite couche de revêtement ignifuge est formée à partir de l'application de ladite composition liquide polymérisable sur ledit élément inflammable selon une technique d'enduction choisie parmi la pulvérisation, le trempage, l'imprégnation et l'application au pinceau.

Dans un deuxième mode de réalisation, ladite couche de revêtement ignifuge est formée à partir d'un ruban imprégné de ladite composition liquide polymérisable et rubané sur ledit élément inflammable.

De manière avantageuse, ladite composition liquide polymérisable peut contenir un diluant réactif comportant un composé, dit antibrasion, qui est de préférence de structure bicyclique et contenant au moins un groupement fonctionnel sélectivement réactif avec l'un des groupements fonctionnels dudit précurseur de polymère.

De cette façon, le revêtement est non seulement hautement ignifuge mais résistant à l'abrasion et présente de bonnes propriétés thermomécaniques. En outre, le composé antibrasion est aisément miscible, améliore l'applicabilité de la composition.

Ladite composition est polymérisable par exemple par rayonnement actinique (ultraviolet, électron, gamma etc).

Un précurseur de polymère (monomère, oligomère) comportant au moins un groupement phosphore et des groupements fonctionnels acrylates est commercialisé par exemple par la société UCB Chemicals sous la référence Ebecryl IRR 527.

Le nombre de parties en masse dudit composé antiabrasion par rapport à 100 parties en masse de ladite composition peut être de préférence inférieur à 95 et de préférence compris entre 10 et 30 pour conserver le caractère hautement ignifuge du revêtement.

Lorsque ledit composé antiabrasion contient au moins un groupement fonctionnel acrylate, le poids équivalent en acrylate dudit composé antiabrasion peut être de préférence supérieur à 80 et de préférence sensiblement égal à 210.

Par « poids équivalent en acrylate » on entend la masse molaire du composé rapporté au nombre de fonctions acrylates par molécule.

De cette façon, la couche de revêtement va présenter de bonnes propriétés mécaniques, notamment d'élasticité (élongation à la rupture élevée), ainsi qu'une dureté améliorée.

De préférence, ladite composition liquide est polymérisable par rayonnement actinique et lorsque ledit rayonnement actinique est de type ultraviolet, cette composition peut comprendre un photoinitiateur, le nombre de parties en masse dudit photoinitiateur par rapport à 100 parties en masse de ladite composition est entre 0,1 et 10 et de préférence sensiblement égal à 3.

Avantageusement, ladite composition liquide est polymérisable par rayonnement UV et peut contenir :
- 80 parties en masse dudit précurseur de polymère, ledit précurseur étant un oligomère exempt d'halogènes,
- 17 parties en masse d' acrylate d'isobornyle,
- 3 parties en masse d'un photoinitiateur.

D'autres caractéristiques et avantages de la présente invention apparaîtront dans la description suivante des exemples donnés à titre illustratif et nullement limitatif.

Les exemples 1 et 2 concernent une composition liquide polymérisable par rayonnement de type actinique pour la fabrication d'une couche de revêtement ignifuge selon l'invention d'un câble d'énergie, de données ou de télécommunications.

### Exemple 1

### Composition n°1

- 97 parties en masse d'Ebecryl IRR527 de la société UCB Chemicals, oligomère polyester acrylate sans halogène comportant deux groupements fonctionnels acrylates et des groupements phosphores,
- 3 parties en masse du photoinitiateur DAROCUR1173 (nom commercial) de la société CIBA.

### Exemple 2

### Composition n °2

- 80 parties en masse d' Ebecryl IRR527,
- 17 parties en masse d'un acrylate d'isobornyle, de structure bicyclique, tel que le Genomer 1121 de la société RAHN, de poids équivalent en acrylate égal à 208,
- 3 parties en masse du photoinitiateur DAROCUR1173 (nom commercial)

Les propriétés d'un revêtement n°1 en un matériau à base d'un polymère obtenu après polymérisation par rayonnement ultraviolet de la composition n°1 et d'un revêtement n°2 en un matériau à base d'un polymère obtenu après polymérisation par rayonnement ultraviolet de la composition n°2 sont consignées dans le tableau 1.

Dans ces exemples, le précurseur contenant déjà des groupements phosphore, le polymère obtenu est lié chimiquement à des groupements phosphore.

**Tableau 1**

| | Revêtement n°1 | Revêtement n°2 |
|---|---|---|
| Contrainte à la rupture (MPa) à 25°C | 13,4 | 21,4 |
| Elongation à la rupture (%) | 46 | 43,1 |
| Dureté (méthode Buchholz) | <59 | 123 |

La composition n°1 présente une viscosité par chauffage à 60°C égale à environ 17000 mPa.s. La composition n°2, de viscosité à 50°C égale à environ 1206 mPa.s, est plus facilement applicable que la composition n°1 et conduit au revêtement n°2 de bonne élasticité et résistant mieux à l'abrasion.

D'une part, l'emploi d'un acrylate d'isobornyle permet d'améliorer les propriétés mécaniques et la résistance à l'abrasion du revêtement. En outre ce composé ayant un groupement fonctionnel acrylate réactif avec l'un des groupements fonctionnels acrylates de l'oligomère, permet de réaliser une polymérisation complète à l'aide d'une lampe à vapeur de mercure moyenne pression émettant dans l'ultraviolet et principalement dans le domaine des longueurs d'onde comprises entre 200 et 400 nm, lampe commercialisée par exemple par la société Fusion, de puissance 200W/cm, à la vitesse de défilement de 80m/min et en une passe, même pour une épaisseur de revêtement de l'ordre de 100µm.

Dans une variante, l'une ou l'autre des compositions n°1 ou n°2 peut comporter en outre des pigments, des charges, des additifs d'étalement ou de glissement, des promoteurs d'adhésion, des stabilisants aux ultraviolets, des antioxydants.

Le tableau 2 ci-après répertorie les résultats de tests menés selon le protocole ISO 4589-2 pour déterminer l'indice limite d'oxygène (ILO), le temps d'autoextinction et la longueur de combustion de 5 échantillons et ainsi caractériser leurs propriétés ignifugeantes.

L'échantillon n°1 comparatif comprend une couche de matériau de gainage pour câble d'énergie composée d'un copolymère d'acétate de vinyle et d'éthylène (EVA) incluant des charges minérales ignifugeantes telles que le trihydrate d'alumine Al₂O₃,3H₂O.

Les échantillons n°2 et n°3 comprennent chacun une couche d'EVA chargée similaire à celle de l'échantillon n°1, recouverte d'un revêtement externe ignifuge en un matériau à base d'un polymère obtenu à partir de la composition n°1 selon l'invention.

Les échantillons n°4 et n°5 comprennent chacun une couche d'EVA chargée similaire à celle de l'échantillon n°1 et recouverte d'un revêtement externe ignifuge en un matériau à base d'un polymère obtenu à partir de la composition n°2 selon l'invention.

Grâce à leur revêtement externe selon l'invention, les échantillons n°2, n°3 et n°5 présentent un ILO augmenté de 5% par rapport à celui de l'échantillon n°1 (contre 1% pour l'échantillon n°4) .

Grâce à son revêtement externe selon l'invention, l'échantillon n°4 présente un ILO augmenté de 1 % par rapport à celui de l'échantillon n°1.

**Tableau 2**

| N° de l'échantillon | Epaisseur du revêtement externe (µm) | ILO (%) | Temps d'extinction (s) | Longueur de combustion (mm) |
|---|---|---|---|---|
| 1 | - | 32 | > 120 | 10 |
| 2 | 40 | 37 | 175 | 35 |
| 3 | 70 | 37 | 170 | 35 |
| 4 | 50 | 33 | 58 | 5 |
| 5 | 100 | 37 | 103 | 10 |

L'emploi de l'acrylate d'isobornyle nécessite d'augmenter l'épaisseur de revêtement pour obtenir l'ILO de 37%. Toutefois, on observe, à partir des tests sur l'échantillon n°5, que ce composé permet non seulement d'améliorer les propriétés mécaniques et la résistance à l'abrasion du revêtement mais également de réduire la longueur de combustion et de raccourcir le temps d'extinction.

Le tableau 3 ci-après répertorie les résultats de tests sur trois câbles à la verticale, tests menés selon le protocole IEC 3321. Le test consiste à soumettre un câble ou un conducteur isolé en position verticale à une flamme alimentée d'un mélange air /propane de débits respectifs 4l/min et 640ml/min provenant d'un brûleur positionné à un angle de 45° par rapport à l'axe vertical de l'échantillon pendant une durée de 60 secondes, puis de déterminer le temps d'extinction et la longueur de combustion.

Le câble n°1 comporte un conducteur de cuivre de section égale à 16mm² revêtu d'une couche isolante inflammable en un composé contenant un polyéthylène réticulé par voie silane et sans charges minérales ignifugeantes.

Les câbles n°2 et n°3 comportent un conducteur de cuivre revêtu similaire au conducteur du câble n°1 revêtus chacun d'une couche isolante similaire à la couche du câble n°1, laquelle est recouverte d'une couche externe de revêtement ignifuge en un matériau à base d'un polymère obtenu à partir de la composition n°1 pour l'un et de la composition n°2 pour l'autre.

La polymérisation est obtenue à l'aide d'une lampe ultraviolet à 200W/cm et la vitesse de défilement est de 50m/min.

**Tableau 3**

| N° du Câble | Epaisseur du revêtement externe (µm) | Temps d'extinction | Longueur de combustion (mm) |
|---|---|---|---|
| 1 | - | > 4' | 440 |
| 2 | 41 | 2'28" | 135 |
| 3 | 100 | 2'26 | 95 |

Le câble passe le test si la distance de combustion au-dessus de la zone d'application de la flamme dépasse 425 mm. Comme attendu, le câble n°1 ne passe pas le test. Par ailleurs, la longueur de combustion du câble n°3 est inférieure à celle du câble n°2.

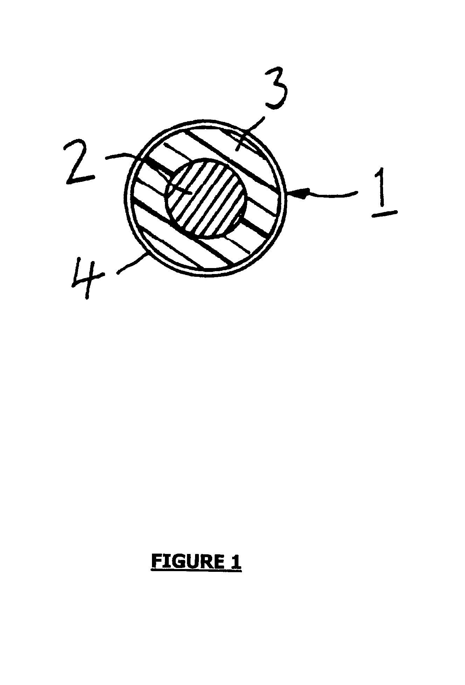

La figure 1 montre une vue en coupe transversale d'un câble d'énergie selon l'invention.

Le câble 1 comprend par exemple un élément de transmission 2 tel qu'un conducteur électrique, en cuivre par exemple, revêtu d'une couche isolante inflammable 3, elle-même revêtue d'une couche 4 de revêtement ignifuge en un matériau à base d'un polymère obtenu par exemple à partir de la composition n°2 et d'épaisseur de préférence égale à 100µm environ.

La couche 4 selon l'invention est une couche extérieure de revêtement de la couche isolante, puisqu'elle assure les propriétés ignifugeantes et de préférence de résistance à l'abrasion. Cependant, le câble 1 peut bien entendu comprendre une ou plusieurs autres couches entre la couche isolante et la couche 4 selon l'invention.

La couche de revêtement ignifuge est formée à partir de l'application de la composition liquide polymérisable sur la couche isolante inflammable selon une technique d'enduction classique par exemple l'application au pinceau ou la pulvérisation.

Dans une variante, la couche de revêtement ignifuge est formée à partir d'un ruban imprégné de la composition et rubané sur la couche isolante inflammable.

L'invention s'applique aussi bien à tout autre élément inflammable rentrant dans la fabrication d'un câble de télécommunications ou d'énergie, par exemple un élément de renfort, un tube de protection de fibres optiques, un élément de bourrage, une âme rainurée, une tresse.

De manière plus générale, l'invention s'applique aussi bien aux câbles d'énergie qu'aux câbles de télécommunications, qu'aux câbles de données, électriques ou à fibres optiques.

## Revendications

1. Câble ignifugé (1) comportant un élément de transmission (2), un élément inflammable (3), une couche de revêtement ignifuge (4) entourant ledit élément inflammable (3) et en un matériau à base d'un polymère obtenu à partir d'une composition liquide polymérisable contenant au moins un précurseur dudit polymère comprenant des groupements fonctionnels choisis parmi les acrylates, les méthacrylates, les époxydes, les éthers vinyliques, les éthers allyliques et les oxétanes,
**caractérisé en ce que** ledit matériau comprend au moins un groupement phosphore.

2. Câble ignifugé (1) selon la revendication 1 **caractérisé en ce que** ledit groupement phosphore est lié chimiquement audit polymère.

3. Câble ignifugé (1) selon l'une des revendications 1 ou 2 **caractérisé en ce que** le précurseur dudit polymère comporte au moins un groupement phosphore.

4. Câble ignifugé (1) selon l'une des revendications 1 à 3 **caractérisé en ce que** ledit matériau est exempt d'halogènes.

5. Câble ignifugé (1) selon l'une des revendications 1 à 4 **caractérisé en ce que** ledit élément inflammable est choisi parmi l'un ou plusieurs des éléments suivants : une couche isolante, une couche de gainage, un élément de renfort, un tube de protection de fibres optiques, un élément de bourrage, une âme rainurée, un ruban, une tresse.

6. Câble ignifugé (1) selon l'une des revendications 1 à 5 **caractérisé en ce que**, lorsque ledit élément inflammable est une couche isolante, ladite couche isolante est faite en un matériau choisi parmi un polymère thermoplastique exempt d'halogène et de préférence un polyéthylène.

7. Câble ignifugé (1) selon l'une des revendications 1 à 6 **caractérisé en ce que** l'élément de transmission est choisi parmi un conducteur optique et un conducteur électrique.

8. Câble ignifugé (1) selon l'une des revendications 1 à 7 **caractérisé en ce que** ladite couche de revêtement ignifuge est formée à partir de l'application de ladite composition liquide polymérisable sur ledit élément inflammable selon une technique d'enduction choisie parmi la pulvérisation, le trempage, l'imprégnation et l'application au pinceau.

9. Câble ignifugé (1) selon l'une des revendications 1 à 7 **caractérisé en ce que** ladite couche de revêtement ignifuge est formée à partir d'un ruban imprégné de ladite composition liquide polymérisable et rubané sur ledit élément inflammable.

10. Câble ignifugé (1) selon l'une des revendications 1 à 9 **caractérisé en ce que** ladite composition liquide polymérisable contient un diluant réactif comportant un composé, dit antibrasion, étant de préférence de structure bicyclique et contenant au moins un groupement fonctionnel sélectivement réactif avec l'un des groupements fonctionnels dudit précurseur de polymère.

11. Câble ignifugé (1) selon la revendication 10 **caractérisé en ce que** le nombre de parties en masse dudit composé antiabrasion par rapport à 100 parties en masse de ladite composition liquide est inférieur à 95 et de préférence compris entre 10 et 30.

12. Câble ignifugé (1) selon l'une des revendications 10 ou 11 **caractérisé en ce que**, lorsque ledit composé antiabrasion contient au moins un groupement fonctionnel acrylate, le poids équivalent en acrylate dudit composé antiabrasion est supérieur à 80 et de préférence sensiblement égal à 210.

13. Câble ignifugé (1) selon l'une des revendications 1 à 12 **caractérisé en ce que** la composition liquide est polymérisable par rayonnement actinique et, lorsque ledit rayonnement actinique est de type UV, la composition comprend un photoinitiateur.

14. Câble ignifugé (1) selon la revendication 13 **caractérisé en ce que** le nombre de parties en masse dudit photoinitiateur par rapport à 100 parties en masse de ladite composition est entre 0,1 et 10 et de préférence sensiblement égal à 3.

15. Câble ignifugé (1) selon l'une des revendications 1 à 14 **caractérisé en ce que** la composition liquide est polymérisable par rayonnement UV et contient :
- 80 parties en masse dudit précurseur de polymère, ledit précurseur étant un oligomère exempt d'halogènes,
- 17 parties en masse d'un acrylate d'isobornyle,
- 3 parties en masse d'un photoinitiateur.
